# EUROPEAN PATENT APPLICATION

(11) **EP 2 290 306 A2**
(43) Date of publication of application: **02.03.2011**
(21) Application number: 10174452.2
(22) Date of filing: 30.08.2010
(51) Int. Cl.: F25B 47/00, F25B 49/02, F25D 31/00

(54) **Cooling device**

(30) Priority: 31.08.2009 BE 200900528
(71) Applicant: Packo Inox NV, 8210 Zedelgem (BE)
(72) Inventor: Ameel, Johan, 9250, Waasmunster (BE); Verstraete, Kurt, 8610, Kortemark (BE); Rogiers, Eric, 8210, Zedelgem (BE); De Keyzer, Eric, 8480, Ichtegem (BE)
(74) Representative: Ostyn, Frans

(57) **Abstract**

The present invention relates to an energy-saving cooling device for cooling a liquid, comprising:
- a cooling circuit (1), comprising an evaporator (2), a compressor (3), a condenser (4), and an expansion valve (5);
- a receptacle for the liquid, in which the evaporator (2) is accommodated;
- means (7) for measuring a first circuit parameter in the cooling circuit (1) between the condenser (4) and the expansion valve;
- means (6) for measuring a second circuit parameter in the cooling circuit (1) between the evaporator (2) and the compressor (3); and
- actuating means (6, 7) for actuating the condenser (4) on the basis of the measured circuit parameters.

## Description

The present invention relates to a cooling device for cooling a liquid, comprising:
- a closed cooling circuit filled with a cooling liquid, comprising an evaporator, a compressor, a condenser and an expansion valve;
- a receptacle for the liquid in which the evaporator from the cooling circuit is accommodated;
- a measuring device which is provided with means for measuring a first circuit parameter in the section of the closed cooling circuit situated between the condenser and the expansion valve; and
- actuating means for actuating the condenser on the basis of this measured first circuit parameter.

Such a cooling circuit is also known as a heat pump.

Such cooling devices are used in various industries. A known example of such a cooling device are milk cooling tanks for cooling milk after milking of for example cows. This milk has to be stored at a dairy farm between collections or in order to be processed. Rapid and efficient cooling is required in order to keep the milk fresh and ensure its quality. After milking, the milk is therefore cooled down in such a milk cooling tank from approximately 20°C to 37°C to a storage temperature of, for example, approximately 4°C. Similar cooling devices are used when the milk is being processed in dairies in order to keep, for example cream or yoghurt, etc., cool.

Another known example of such a cooling device are cooling devices which are used to cool blood of slaughtered animals. When this blood has to be stored for further use in the food industry, it is cooled from approximately 20°C to 37°C to a storage temperature of, for example, approximately 4°C.

During the cooling process, the liquid is continuously cooled until measurements show that the desired temperature has been reached. Then, cooling by means of the cooling device is temporarily halted. When measurements show that the temperature of the liquid has again reached a certain threshold value, cooling is effected again until the desired temperature of the liquid is reached again. This process is repeated in order in this way to keep the temperature of the liquid as constant as possible after the initial cooling.

With cooling devices which are used to cool aqueous solutions from a relatively high temperature to a temperature close to freezing point of this solution, there is a risk that this liquid could freeze at the location of the evaporator. This undesired freezing can adversely affect the characteristics of the aqueous solution. In the case of, for example, milk this leads to lipolysis. In order to prevent this risk, the temperature of the cooling liquid used in the closed cooling circuit in modern cooling devices is kept as close as possible to the storage temperature in the evaporator. Cooling devices according to the main or first claim are to this end provided with a measuring device which has means for measuring a first circuit parameter in the section of the closed cooling circuit situated between the condenser and the expansion valve and with actuating means for actuating the condenser on the basis of the measured first circuit parameter. In practice, the pressure is measured as the first circuit parameter. As soon as this measured pressure drops below a critical value (threshold value), the efficiency of the condenser is reduced. This condenser is usually an air-cooled condenser which comprises one or more fans. When the efficiency of the condenser is reduced, one or more fans are shut down or slowed down by shutting down or slowing down their respective motor.

However, as a result thereof, the cooling process requires significantly more energy and time than when a liquid has to be cooled down by the same temperature difference without the risk of freezing.

Particularly in winter, such a cooling device uses more energy and takes more time. In summer, when the ambient temperature of the surroundings where the cooling device is situated is, for example, approximately 25° C, the pressure in the closed cooling circuit between the condenser and the expansion valve remains above said critical value. With lower ambient temperatures, such as for example in the winter, at approximately 10°C, the pressure in the closed cooling circuit between the condenser and the expansion valve may drop below said critical value, resulting in the known higher consumption of energy in order to cool the liquid over a certain temperature difference.

With other types of cooling devices, without a receptacle for the liquid to be cooled, where the problem of freezing is less critical because the liquid to be cooled or the gas to be cooled flows through the heat exchanger, such as for example an air-conditioning system or an installation for dehumidifying compressed gas, etc., relatively expensive monitoring means are provided in order to prevent freezing of the liquid to be cooled or of condensed water on the heat exchanger.

Thus, WO 2007/087248 A2 describes an air-conditioning system which is provided with a control device which actuates at least the compressor and the fan of the condenser ([0025]) on the basis of at least measurements of the ambient temperature ([0015]). A low pressure switch (LPS180) in the cooling circuit, between the evaporator and the compressor, is used as protection to shut down the compressor and generate an alarm signal when cooling liquid ([0010], [0018] and [0027]) leaks. However, such an air-conditioning system can not be fitted near the cooling circuit in a compact manner, since at least one measuring device for measuring the outside temperature has to be provided. In addition, a relatively expensive calculation unit with a certain calculation capacity is required in order to be able to control the compressor and the fan on the basis of the measurements using specific algorithms. Due to the dual adjustment of the control of the compressor, depending on the ambient temperature, the cooling efficiency at low outside temperatures is slightly increased.

JP 2006-346607 describes an installation for dehumidifying compressed gas, in which the compressor is actuated directly ([0019]) at the same time as the fan of the condenser, in order to prevent freezing of condensed water, and which uses a relatively expensive calculation unit on the basis of numerical calculations.

The cooling device as described in JP 2002-130847, in which the liquid to be cooled flows through the heat exchanger, also requires a relatively expensive calculation unit in order to prevent the liquid to be cooled from freezing on the heat exchanger.

It is therefore an object of the present invention to provide a cooling device which requires less energy and time for the same cooling process than the existing cooling devices for cooling a liquid in a receptacle with a device for preventing freezing of said liquid, in which preventing the freezing of the liquid can be achieved by components which are generally commercially available, without requiring the use of relatively expensive calculating units and complex control algorithms.

This object is achieved by providing a cooling device for cooling a liquid, comprising:
- a closed cooling circuit filled with a cooling liquid, comprising an evaporator, a compressor, a condenser and an expansion valve;
- a receptacle for the liquid in which the evaporator from the cooling circuit is accommodated;
- a measuring device which is provided with means for measuring a first circuit parameter in the section of the closed cooling circuit situated between the condenser and the expansion valve;
- a measuring device which is provided with means for measuring a second circuit parameter in the section of the closed cooling circuit situated between the evaporator and the compressor; and
- in order to prevent the formation of ice in the receptacle, actuating means for actuating only the condenser, solely on the basis of both this measured first circuit parameter and the measured second circuit parameter and independent from the ambient temperature around the condenser.

With existing cooling devices for cooling a liquid in a receptacle, comprising a measuring device for measuring the first circuit parameter in the section of the closed cooling circuit situated between the condenser and the expansion valve (this is also referred to as the high-pressure zone), the cooling action is reduced, even when this is not required. Even in winter, when the ambient temperature of the cooling device is, for example, approximately 10°C, there is no danger of freezing of the liquid when cooling this liquid from a relatively high temperature to, for example, 8°C. Yet, even in that case, the efficiency of the condenser is reduced when the pressure in the section of the closed cooling circuit situated between the condenser and the expansion valve drops below a certain threshold value.

By now basing the control of the condenser not solely on the measurements of a circuit parameter in the high-pressure zone in the cooling circuit, but also on measurements from a circuit parameter in the low-pressure zone in the cooling circuit (this is the section of the cooling circuit situated between the evaporator and the compressor), it is possible to ensure that the liquid, in a first phase, is cooled down very quickly to a specific temperature where no freezing of this liquid can occur, following which the liquid can be cooled down further more slowly to the temperature range where there is a risk of freezing of the liquid.

By keeping the high pressure of the cooling device low for as long as possible, without undesired freezing occurring, the efficiency of the cooling device increases and the energy consumption and total cooling time are reduced.

More specifically, but not in a limiting way, the condenser of such a cooling device according to the present invention is an air-cooled condenser, which comprises one or more fans, in which one or more of these fans are actuated when the condenser is actuated.

In a preferred cooling device according to the present invention, the first circuit parameter is the pressure and/or the temperature in said section of the closed cooling circuit situated between the condenser and the expansion valve.

An advantageous embodiment of this cooling device then comprises a pressure switch or a temperature switch which forms part of the means for measuring the first circuit parameter and which forms part of the actuating means for actuating the condenser on the basis of the measured first and the measured second circuit parameters.

Such a pressure switch or temperature switch is now also used with the cooling devices according to the prior art in order to be able to actuate the condenser on the basis of measurements of the pressure in the high-pressure zone in the cooling circuit.

The second circuit parameter is preferably also the pressure and/or the temperature in said section of the closed cooling circuit situated between the evaporator and the compressor.

An advantageous embodiment of such a cooling device with the pressure and/or temperature as second circuit parameter then comprises a pressure switch or temperature switch which forms part of the means for measuring the second circuit parameter and which forms part of the actuating means for actuating the condenser on the basis of the measured first and the measured second circuit parameters.

The actuating means of a first particular embodiment of a cooling device according to the present invention ensure that the condenser works at a certain efficiency when the measured first circuit parameter is above a first threshold value and/or the measured second circuit parameter is above a second threshold value. Said specific efficiency may, for example, be the maximum efficiency. In this particular embodiment, the efficiency of this condenser is reduced by the actuating means when the measured first circuit parameter and the measured second circuit parameter are below the first threshold value and the second threshold value, respectively.

In the case of an air-cooled condenser, the fans will operate at full capacity when one of the two circuit parameters is above the respective threshold value. Only when both circuit parameters drop below their respective threshold value are the fans shut down or slowed down by shutting down or slowing down their respective motors.

The actuating means of a second particular embodiment of a cooling device according to the present invention ensure that the condenser works at a certain efficiency when the second circuit parameter is above a second threshold value and increase the efficiency thereof when the values of the first circuit parameter increase and reduce it when the values of the first circuit parameter decrease, when the second circuit parameter is below the second threshold value.

The present invention is now explained in more detail by means of the following detailed description of a preferred embodiment of a cooling device according to the present invention. The description is solely intended to give illustrative examples and to indicate further advantages and particulars of this cooling device and can therefore in no way be interpreted as a limitation of the area of use of the invention or of the patent rights as laid down in the claims.

In this detailed description, reference numerals are used to refer to the attached drawings, in which:

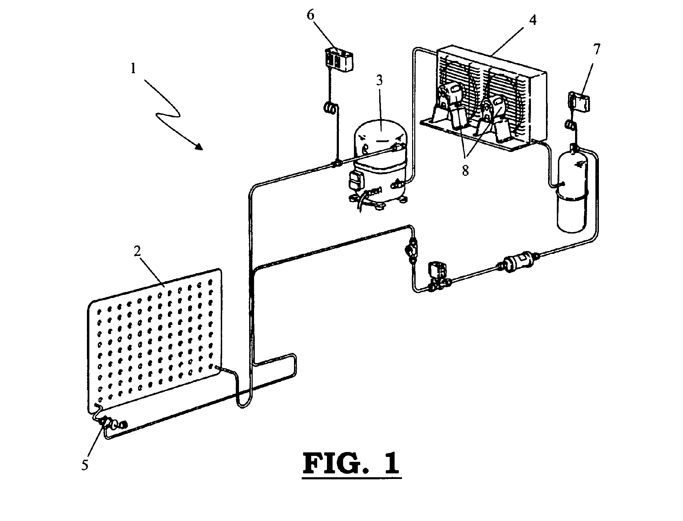

***-*** ***Fig. 1*** diagrammatically shows a preferred embodiment of a cooling device according to the present invention without the receptacle of this cooling device.

The cooling device discussed below is a milk cooling tank. The remarks made in this context also apply mutatis mutandis to cooling devices for, for example, the cooling of blood or yet further cooling devices for liquids, where there is a risk of unacceptable freezing of the liquid.

Fig. 1 shows the closed cooling circuit (1) of a milk cooling tank. This closed cooling circuit (1) is, for example, filled with R-404A as a coolant. Another coolant could be used equally well. The closed cooling circuit (1) comprises an evaporator (2), a compressor (3), a condenser (4) and an expansion valve (5). Here, the condenser (4) is an air-cooled condenser (4) which comprises two fans (8).

In this case, the evaporator (2) is accommodated in the tank of the milk cooling tank, which is not shown here, however.

In order to reduce the cooling action of the milk cooling tank when there is a risk of freezing of the milk at the location of the evaporator (2), the milk cooling tank is provided with a pressure switch (7) for measuring the pressure in the section of the closed cooling circuit (1) situated between the condenser (4) and the expansion valve (5). This section is also referred to as the high-pressure zone of the cooling circuit (1).

In order to still ensure maximum cooling of the milk in the milk cooling tank when the milk is still above a temperature at which there is not yet any danger of it freezing (in practice around 8°C), the milk cooling tank is additionally provided with a pressure switch (6) for measuring the pressure in the section of the closed cooling circuit (1) situated between the evaporator (2) and the compressor (3). This section is also referred to as the low-pressure zone of the cooling circuit (1).

It is known that the pressure in a section of the high-pressure zone increases or decreases when the temperature in this zone increases or decreases, respectively, and that, analogously, the pressure in a section of the low-pressure zone increases or decreases when the temperature in this zone increases or decreases, respectively.

By measuring the pressure in this section of these zones, the temperature in these zones is indirectly also measured. Conversely, when the temperature in this section of these zones is measured, the pressure is indirectly also measured.

Furthermore, the cooling device comprises actuating means (6, 7) for actuating the condenser (4) on the basis of both the measured first circuit parameter and of the measured second circuit parameter. The pressure switches (6, 7) form part of these actuating means (6, 7).

The actuating means (6, 7) ensure the fans (8) of the condenser (4) rotate at a certain speed when the measured first circuit parameter is above a first threshold value and the measured second circuit parameter is above a second threshold value. As soon as the first circuit parameter drops below the first threshold value and the second circuit parameter respectively drops below the second threshold value, the actuating means shut down one or both fans (8) or reduce the speed of one or both fans (8). This reduces the air current across the condenser (4) and as a result thereof, the temperature increases and consequently also the pressure in the condenser (4). The pressure and the temperature of the evaporator (2) also increase as a result thereof. Thus, the temperature difference between the cooling liquid in the evaporator (2) and the milk to be cooled is reduced and therefore also the cooling action.

As mentioned in the prior art, the first threshold value is set to such a value that, when the measured pressure in the high-pressure zone drops below this threshold value, the temperature difference between the cooling liquid in the evaporator (2) and the milk to be cooled is restricted in order to prevent freezing of the milk in the tank at the location of the evaporator (2). As the setting of this first threshold value is already known from the prior art, this will not be discussed here in any more detail.

The second threshold value is set to such a value that, as long as it is not necessary to reduce this temperature difference - as the milk still has a temperature which is sufficiently different from a temperature at which there is a real risk of it freezing - the condenser (4) can still operate at full power.

In practice, it is found that with most milk cooling tanks, when R-404A is used as coolant, this second threshold value corresponds to a temperature of, for example, approximately -6°C in the section of the cooling circuit (1) situated between the evaporator (2) and the compressor (3). However, in production it is not possible to produce milk cooling tanks in such a manner that they are exactly identical to one another. The setting of this second threshold value is therefore dependent on various factors. This second threshold value is inter alia dependent on the cooling liquid used, the liquid to be cooled and on the specific cooling device. Therefore, it is expedient to set this second threshold value empirically for each cooling circuit. This may be carried out, for example, by initially setting this second threshold value to, for example, -6°C when the milk cooling tank is produced and to subsequently, during installation, adjust this second threshold value by means of a test with water (for example using an adjusting screw). The closer this threshold value is to the danger zone where there is real risk of the milk freezing, the more energy is saved on cooling. However, this threshold value also has to be sufficiently far removed from this danger zone in order to effectively prevent freezing of the milk.

## Claims

1. Cooling device for cooling a liquid, comprising:
- a closed cooling circuit (1) filled with a cooling liquid, comprising an evaporator (2), a compressor (3), a condenser (4) and an expansion valve (5);
- a receptacle for the liquid in which the evaporator (2) from the cooling circuit (1) is accommodated;
- a measuring device which is provided with means (7) for measuring a first circuit parameter in the section of the closed cooling circuit (1) situated between the condenser (4) and the expansion valve (5); and
- actuating means (7) for actuating the condenser (4) on the basis of this measured first circuit parameter;
**characterized in that**
said cooling device comprises a measuring device which is provided with means (6) for measuring a second circuit parameter in the section of the closed cooling circuit (1) situated between the evaporator (2) and the compressor (3), and **in that**, in order to prevent the formation of ice in the receptacle, said cooling device comprises actuating means (6, 7) for actuating only the condenser (4), solely on the basis of both the measured first circuit parameter and of the measured second circuit parameter and independent from the ambient temperature around the condenser (4).

2. Cooling device according to Claim 1, **characterized in that** the condenser (4) comprises one or more fans (8), in which one or more of these fans (8) are actuated when the condenser (4) is actuated.

3. Cooling device according to Claim 1 or 2, **characterized in that** the first circuit parameter is the pressure and/or the temperature in said section of the closed cooling circuit (1) situated between the condenser (4) and the expansion valve (5).

4. Cooling device according to Claim 3, **characterized in that** said cooling device comprises a pressure switch (6) or a temperature switch which forms part of the means (6) for measuring the first circuit parameter and which forms part of the actuating means (6, 7) for actuating the condenser (4) on the basis of the measured first circuit parameter.

5. Cooling device according to one of the preceding claims, **characterized in that** the second circuit parameter is the pressure and/or the temperature in said section of the closed cooling circuit (1) situated between the evaporator (2) and the compressor (3).

6. Cooling device according to one of the preceding claims, **characterized in that** said cooling device comprises a pressure switch (7) or a temperature switch which forms part of the means (7) for measuring the second circuit parameter and which forms part of the actuating means (6, 7) for actuating the condenser (4) on the basis of the measured second circuit parameter.

7. Cooling device according to one of the preceding claims, **characterized in that** the actuating means (6, 7) ensure that the condenser (4) works at a certain efficiency when the measured first circuit parameter is above a first threshold value and/or the measured second circuit parameter is above a second threshold value, and reduce the efficiency of said condenser (4) when the measured first circuit parameter and the measured second circuit parameter are below the first threshold value and the second threshold value, respectively.

8. Cooling device according to one of Claims 1 to 6, **characterized in that** the actuating means (6, 7) ensure that the condenser (4) works at a certain efficiency when the measured second circuit parameter is above a second threshold value and increase the efficiency of the condenser (4) when the values of the first circuit parameter increase and reduce it when the values of the first circuit parameter decrease, when the measured second circuit parameter is below the second threshold value.
